Europäisches Patentamt

**European Patent Office**

**Office européen des brevets**

(11) Publication number: **0 181 088**
**A1**

(12) **EUROPEAN PATENT APPLICATION**

(21) Application number: **85307050.6**

(22) Date of filing: **02.10.85**

(51) Int. Cl.⁴: **C 04 B 11/26**
**B 01 D 53/34**

(30) Priority: **10.10.84 DK 4856/84**
**03.09.85 DK 4019/85**

(43) Date of publication of application:
**14.05.86 Bulletin 86/20**

(84) Designated Contracting States:
**AT DE GB**

(71) Applicant: **A/S NIRO ATOMIZER**
**No. 305 Gladsaxevej**
**DK-2680 Soeborg(DK)**

(72) Inventor: **Jons, Ebbe Skyum**
**No. 52 A Skovmose Allé 52 A**
**DK-3500 Vaerlose(DK)**

(72) Inventor: **Jensen, Torben Winkler**
**No. 31, Kiplings Allé st.**
**DK-2860 Soborg(DK)**

(74) Representative: **Wilkinson, Stephen John et al,**
**c/o Stevens, Hewlett & Perkins 5 Quality Court Chancery**
**Lane**
**London WC2A 1HZ(GB)**

(54) A process for the manufacture of a quick setting high strength hardening composition.

(57) A quick setting high strength hardening composition is prepared using a spent lime-based absorbent from flue gas desulfurization as starting material. The clacium sulfite in the dry spent absorbent is oxidized to calcium sulfate, and by treatment of the dry oxidized spent absobent with sulfuric acid at a temperature above 55°C, basic calcium compounds, i.e. lime which has not reacted in the desulfurization process, or CaO formed from said lime during oxidation, are neutralized.

EP 0 181 088 A1

A PROCESS FOR THE MANUFACTURE OF A QUICK SETTING HIGH
STRENGTH HARDENING COMPOSITION.

BACKGROUND OF THE INVENTION.

The present invention deals with the utilization of dry spent absorbent resulting from the desulfurization of flue gasses by means of lime-containing absorbent. More particularly the invention is directed to a process for the manufacture of a quick setting high strength hardening composition using said spent absorbent as starting materials.

The starting materials of the present process are recovered from desulfurization processes in which flue gasses are decontaminated by contact with a lime based absorbent. The flue gasses may be contacted either with dry powdery lime or, preferably, a suspension of lime may be atomized into a stream of hot flue gasses in a so called spray absorption process. Both methods produce a spent absorbent which is recovered as a dry powder which contains calcium sulfite, calcium sulfate, non-reacted lime and possibly fly ash.

In this specification and in the attached claims and abstract the term "lime" is used in its broadest scope covering quick lime ($CaO$), hydrated lime ($Ca(OH)_2$) and limestone ($CaCO_3$).

The spent absorbent should preferably have a content of non-reacted lime ranging from a few percent by weight up to not more than 20% by weight. At the present stage of technology said requirement is best fulfilled by an absorbent resulting from a spray absorption process in which a suspension of hydrated lime is spray dried in the hot flue gas to be desulfurized, and in the following the invention will, for the sake of simplicity, be explained assuming that type of starting material being used.

A spray absorption desulfurization process producing a suitable starting material is described e.g. in US patent specification 4,197,278.

Spent absorbent of the above type may contain varying amounts of fly ash dependent on the extent to which fly ash has been removed before the desulfurization process.

For the purpose of the present invention the spent absorbent should preferably not contain more than 50% by weight of fly ash.

It is well known that fly ash-containing spent absorbent have cementitious properties as disclosed in US patent specification No. 4,371,414. However, said properties can only be utilized in connection with very long hardening periods which puts severe limitations to the industrial utilization of said cementitious properties.

To make these spent absorbents more suitable as gypsum substitutes e.g. in the manufacture of Portland Cement it is known c.f. published European patent application No. 74,258, to oxidize the sulfite contents into sulfate by heating the spent absorbent in an oxygen-containing gas.

The resulting product contains primarily anhydrous calcium sulfate in the form of β-anhydrite. It is not suitable as a cementitious product, since it does not form a quick setting material when mixed with-water.

However, there is a substantial demand for a relatively high strength hardening composition which sets a few minutes after contact with water.

Especially in the field of mining and related subterranean technology there is a need for a low cost, quick setting composition available in substantial amounts and having a high final strength.

SUMMARY OF THE INVENTION.

It has now been found that by treating the above described dry oxidized spent absorbent with sulphuric acid to neutralize the lime which has not reacted in the desulfurization process, and which possibly has been converted to CaO in the oxidation process, a composition may be obtained having the above described desired properties, provided that the neutralization is performed at a temperature above 55°C.

Consequently the process according to the invention for producing the desired quick setting high strength hardening composition comprises the steps of

(a)   recovering a dry spent absorbent resulting from a lime-based flue gas desulfurization process, and comprising calcium sulfite, calcium sulfate and non-reacted lime,

(b)   oxidizing said dry spent absorbent in an oxygen containing gas at elevated temperature to convert the calcium sulfite into calcium sulfate, and

(c)   contacting the oxidized spent absorbent with sulfuric acid to neutralize basic calcium compounds therein at a temperature above 55°C.

By performing the neutralization according to the invention at a temperature above 55°C at least a substantial part of the $CaSO_4$ formed by the neutralization will be γ-anhydrite, whereas the $CaSO_4$ formed by the oxidation will be in the β-anhydrite form.

The oxidation in step (b) is preferably performed in a fluidized bed using agglomerating conditions at a temperature of 700-900°C. The resulting agglomerates is not demolished by the neutralization as it appears from the figures, which represent scanning electron micrographs, where

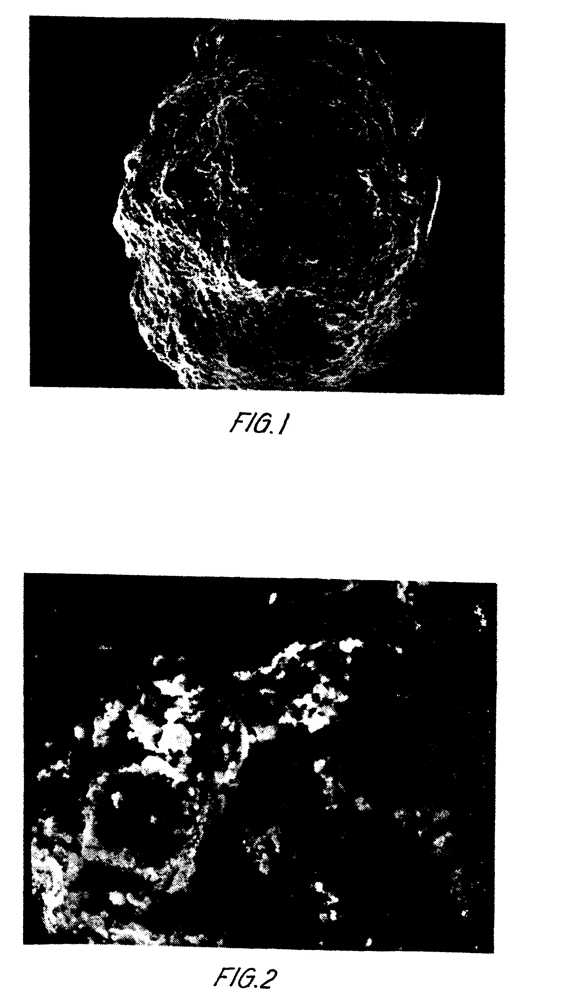

fig. 1 shows an agglomerated oxidized particle before acid treatment, enlargement 50 diameters,

fig. 2 shows an area of the same particle, enlargement 3000 diameters,

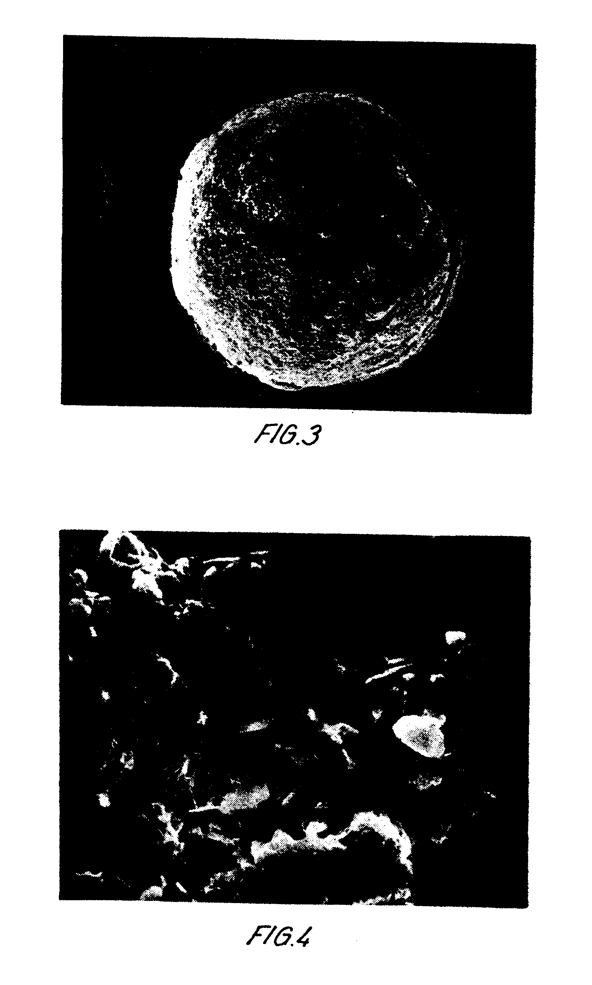

fig. 3 shows a particle of a product treated according to the invention as described in Example 2 below, enlargement 50 diameters, and

fig. 4 shows an area of the particle of fig. 3, enlargement 3000 diameters.

Each of the particles thus contains both β-anhydrite and γ-anhydrite and thereby the product is a new material, which, to the best of applicants knowledge, has not previously been produced.

The described composition and structure provides for very useful and desired setting and strength characteristics of the composition when mixed with water. The γ-anhydrite component produces a quick setting and a certain strength at the early stages of the hardening process whereas the β-anhydrite component ensures a very high final strength.

The setting and strength characteristics of the resulting composition makes it very suitable for use as temporary roof support wall material for use in long wall mining of coal.

The sulfuric acid to be used in the process will be of any cheap, readily available quality since contaminations therein will usually not be of concern, especially when the composition is to be used in the mining industry.

The amount of sulfuric acid is fixed with regard to the amount of basic components in the oxidized spent absorbent. Said basic components mainly consist of absorbent which has not reacted in the desulfurization process and which to a substantial degree has been converted to CaO in the oxidation process. The sulfuric acid preferably has a concentration of 50 - 98% by weight.

The amount of acid is fixed by means of prior determination of the percentage of basic compounds. Preferably the amount of acid used corresponds to the one which enables a complete neutralization of said basic compounds.

An amount of water is allowed in the acid because a certain evaporation takes place by the exotermic reaction.

The percentage of non-reacted lime in the starting material should preferably be such that the oxidized material contains basic substances in an amount corresponding to 5-20% by weight calculated as CaO. Thereby sufficient strength of the wetted resulting composition is achieved soon after setting. Larger percentages of non-reacted lime would require too large amounts of sulfuric acid to be economical unless waste sulfuric acid is available at low costs.

Since the neutralization is an exothermic reaction it will usually be possible to achieve the required temperature above 55°C without any heating, provided that the amount of non-reacted lime in the starting material is within the limits stated above.

In performing the process, step (a) will be carried out by withdrawing the spent absorbent from the bottom of a drying chamber wherein a spray drying absorption operation is performed or from a particle collector, e.g. a baghouse, wherein the spent absorbent is separated from the desulfurized flue gas.

Step (b) of the process is preferably performed as described in European patent application 85302517.9 and in published European patent application No. 74,258, incorporated herein by reference.

It is preferably performed in a fluidized bed at a temperature of 700-900°C using such conditions that a simultaneous agglomeration takes place, thereby obtaining a product of desired particle size and particle size distribution, viz. a product having a relatively low specific surface area because the average particle size is large, and which has a particle size distribution corresponding to a small interstitial volume. Said characteristics are importent to achieve a high strength of the hardened product. A too large specific surface area would require too much water for obtaining the pastelike character, and consequently the structure of the hardened material would not be sufficiently by dense.

Step (c) may be carried out using any procedure whicn enables an intimate admixture of the aqueous sulfuric acid with the dry spent absorbent. Very satisfactory results have been obtained by spraying the aquous sulfuric acid onto the oxidized spent absorbent while it is being vigorously agitated, e.g. in a so-called Pflugschar Mischer manufactured by Gebrüder Lödige Maschinenbauwerke G.m.b.H., 4790 Paderborn, BRD. This mixer is a single shaft paddle mixer. The mixer blades are shaped like ploughs and the shaft rotates with a speed of app. 160 rpm.

It has surprisingly turned out that in spite of the fact that a relatively large amount of dry powder has to be treated with a small amount of liquid the treatment results in a very homogenous product wherein substantial all said non-reacted lime has been converted into calcium sulfate.

To ensure a complete neutralization it is preferred to use an amount of sulfuric acid higher than the one required to neutralize the basic components, e.g. up to 10% higher. The surplus of acid is then neutralized later on by adding a further amount of ground oxidized spent absorbent.

It is to be observed that treatment of calcium sulfate containing materials with sulfuric acid has been suggested for a quite different purpose, viz. for facilitating dehydration of calcium sulfate dihydrate to obtain the hemihydrate. However, in that process the sulfuric acid acts solely as a water attracting agent and no chemical reactions take place.

Also sulfuric acid treatment of aqueous slurries from wet scrubbing desulfurization processes has been suggested to obtain calcium hemihydrate of high purity, see DE-OS 2607716. However, said prior art process results in a product substantially different from the one prepared by the process according to the invention.

The invention also comprises a quick setting high strength hardening composition produced by the above described process and comprising particles having an average particle diameter between 0.1 and 3 mm, which particles each contain β-anhydrite and γ-anhydrite.

To further accelerate setting the composition may comprise an alkali metal sulfate, such as potassium sulfate, or any other sulfate which is very soluble in water.

The composition is a free flowing coarse powder which when used is mixed with 15-30% by weight water to produce a slurry which at ambient temperature starts setting after app. 4 minutes, and after 5 hours at ambient temperature reaches a compression strength of 5-8 Mega Pascal (MPa). After one month the compression strength is 30-50 MPa.

The invention is further illustrated by means of the following examples.

### Example 1.

A spent absorbent recovered from the baghouse of a plant for desulfurization of hot flue gas from a coal fired power plant was used as starting material. The desulfurization had been performed by spray drying an aqueous suspension of slaked lime into the flue gas.

The spent absorbent was oxidized in a 1 cm layer in a laboratory kiln. The oxidation was performed at 850°C and lasted for 24 hours.

The material was ground, and the following particle size distribution was obtained:

| | |
|---|---|
| 100% | <0.750 mm |
| 50% | <0.500 mm |
| 10% | <0.065 mm |

The chemical analysis was as follows:

74% by weight calcium sulfate

20% by weight calcium oxide

6% by weight flyash

A sample of this oxidized spent absorbent was treated with hydrochloric acid, and by titration with sodium hydroxide to neutral it was determined how much hydrochloric acid had been consumed by reaction with the calcium oxide.

Based on that determination 1000 g of the oxidized spent absorbent was neutralized with 103 ml 98% sulfuric acid which was added dropwise to the agitated powder (experiments have shown that in industrial scale said addition can be performed by spraying). Thereby the temperature increased to 60-70°C.

100 g of the resulting composition was mixed with 2 g potassium sulfate (as setting accelerator) and 18 ml water.

The resulting paste was cast into small cylinders (diameter 2 cm, height 2 cm) and the compression strength was determined after drying at 40°C. The following results were obtained:

| | |
|---|---|
| After 5h | 7 MPa |
| After 24h | 12 MPa |
| After 7 days | 25 MPa |
| After 28 days | 40 MPa. |

These results indicate that the composition will be suitable for use in the mining industry.

## Example 2.

A spent absorbent similar to the one described in Example 1 was used. Also in this case the absorbent was slaked lime, however, with 4% (calculated on dry matter) of sodium hydroxide added.

The spent absorbent referred to in the following table as FGD product was oxidized at 850°C in a fluidized bed apparatus using air as oxidant. Large product particles were crushed and the product sieved to less than 1.4 mm. (Product reference No. SW35).

A batch of 10 kg of the powder was neutralized in a Lödige Pflugschar-Labormischer, type M20, by atomization of 780 ml concentrated sulfuric acid into the mixer. The amount of sulfuric acid corresponded to an excess of 5% of the amount required for neutralization. The acid addition lasted for 10 minutes and the powder was mixed for another 5 minutes after the acid had been added. The temperature of the mixture raised to 80°C. (Reference of neutralized product: SW 39).

1 kg oxidized powder which had not been treated with sulfuric acid (SW35) was ground to less than 0.75 mm and mixed with 4 kg of the oxidized acid treated powder ref. SW 39. The final mixture is referred to as SW 49.

The chemical composition of the powder at various stages is listed in Table I. It should be noted that the figures for the $\gamma CaSO_4$ contents are calculated on the basis of neutralized CaO.

The properties of the final product, SW 49, were as follows:

## Particle size distribution

| | | |
|---|---|---|
| < 2 mm | 100 % |
| < 1 mm | 89 % |
| < 0.5 mm | 32 % |
| < 0.250 mm | 12 % |
| < 0.125 mm | 5,6% |
| < 0.063 mm | 1,2% |

pH was measured in a 10% aqueous suspension at certain time intervals. The results were as follows:

| After | pH |
|---|---|
| 1 hour | 3 |
| 5 hours | 4 |
| 5 days | 5 |
| "∞" | 7 |

The compression strength was measured on samples prepared from a paste made from water and powder in the proportion 15:100 and dried at 40°C. The following results were obtained:

| After | MPa |
|---|---|
| 5 hours | 6 |
| 1 day | 9 |
| 3 days | 18 |
| 28 days | 22 |

As will be seen from Table I the product contained calcium chloride which is known to have a retarding influence upon the hydration rate. Even so the final strength properties obtained are satisfactory for several applications.

### T A B L E   I

| | FGD Product | Oxidized material | Neutralized material | SW 39 + SW 35 |
|---|---|---|---|---|
| Ref. | | SW 35 | SW 39 | SW 49 |
| Fly ash | 15% | 17% | 15% | 15% |
| $Ca(OH)_2$ | 1% | | | |
| CaO | | 5% | | |
| $CaSO_3 \cdot \frac{1}{2}H_2O$ | 59% | | | |
| $CaSO_3$ | | 0.1% | | |
| $CaCl_2$ | | 1.3% | | |
| $CaCl_2 \cdot 2H_2O$ | 5% | | | |
| $CaCl_2 \cdot 6H_2O$ | | | 2.3% | 2.3% |
| $NaSO_4$ | 3.6% | 1.8% | 1.6% | 1.7% |
| $CaSO_4(\beta)$ | | 68% | 60% | 62% |
| $CaSO_4(\gamma)$ * | | | 11% | 11% |
| $CaSO_4 \cdot 2H_2O$ | 7% | | | |
| $H_2SO_4$ | | | 2.3% | |
| Total | 91% | 93% | 92% | 92% |

\* Calculated on the basis of neutralized CaO.

PATENT CLAIMS.

1. A process for the manufacture of a quick setting high strength hardening composition comprising the steps of

(a) recovering a dry spent absorbent resulting from a lime-based flue gas desulfurization process, and comprising calcium sulfite, calcium sulfate and non-reacted lime,

(b) oxidizing said dry spent absorbent in an oxygen containing gas at elevated temperature to convert the calcium sulfite into calcium sulfate, and

(c) contacting the oxidized spent absorbent with sulfuric acid to neutralize basic calcium compounds therein at a temperature above 55°C.

2. The process of claim 1, wherein the amount of basic calcium compounds in the oxidized absorbent resulting from step (b) is 5-20% by weight, calculated as CaO.

3. The process of claim 1, wherein the oxidation in step (b) is performed in a fluidized bed using agglomerating conditions at a temperature of 700-900°C.

4. The process of claim 1, wherein the oxidized spent absorbent is contacted with an amount of sulfuric acid up to 10% greater than the one required to neutralize the basic calcium compounds present, whereupon the surplus of acid is neutralized by adding further oxidized spent absorbent which has been ground.

5. The process of claim 1, wherein the reaction in step (c) is carried out by spraying the sulfuric acid onto the oxidized spent absorbent while it is being vigorously agitated.

6. The process of claim 1, wherein a sulfate highly soluble in water is incorporated in the composition.

7.  The process of claim 5, wherein said sulfate is potassium sulfate.

8.  A quick setting high strength hardening composition produced by the process of claim 1, and comprising particles having an average particle diameter between 0.1 and 3 mm, which particles each contain β-anhydrite and γ-anhydrite.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| D,A | DE-A-2 607 716  (MITSUI MIIKE MACHINERY) <br> * Claims 1-3; page 4, lines 1-7 * | 1,6,7 | C 04 B   11/26 <br> B 01 D   53/34 |
| A | DE-A-2 943 468  (VER. ELEKTRIZITÄTSWERKE WESTFALEN) <br> * Claim 1; page 8, line 28 - page 9, line 2 * | 1 | |
| A | FR-A-2 510 548  (GOTTFRIED BISCHOFF BAU) <br> * Claim 1 * | 1 | |
| A | US-A-2 418 590  (H.K. LINZELL et al.) <br> * Claim 1 * | 4 | |
| A | CHEMICAL ABSTRACTS, vol. 96, no. 16, 19th April 1982, no. 128601w, Columbus, Ohio, US; & JP - A - 81 164 060 (KAWASAKI HEAVY INDUSTRIES LTD.) 16-12-1981 | | TECHNICAL FIELDS SEARCHED (Int Cl 4) <br><br> C 04 B   11/00 <br> C 04 B   18/00 <br> B 01 D   53/00 <br> C 04 B    7/00 |
| A | DE-C-  210 540  (P. EHESTAEDT) | | |

The present search report has been drawn up for all claims

| Place of search | Date of completion of the search | Examiner |
|---|---|---|
| THE HAGUE | 14-01-1986 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82